# EUROPÄISCHE PATENTSCHRIFT

(11) **EP 2 463 058 B1**
(45) Veröffentlichungstag und Bekanntmachung des Hinweises auf die Patenterteilung: **19.03.2014**
(21) Anmeldenummer: 11401560.5
(22) Anmeldetag: 25.07.2011
(51) Int. Cl.: B24C 1/06, B24C 5/04, B24C 7/00, B05B 1/34

(54) **Strahldüse für eine Vorrichtung zum Strahlbearbeiten bzw. Strahlen von Gegenständen**
Blasting nozzle for a device for blasting-machine or abrasive blasting objects
Buse à jet pour un dispositif de sablage ou de rayonnement d'objets

(30) Priorität: 22.10.2010 DE 102010060134; 24.10.2010 DE 102010060135
(43) Veröffentlichungstag der Anmeldung: 13.06.2012
(73) Patentinhaber: Paul Auer GmbH, 68309 Mannheim (DE)
(72) Erfinder: Hunziker, Werner, 7307 Jenins (CH)
(74) Vertreter: Sartorius, Peter

(56) Entgegenhaltungen:
- EP-A1- 1 820 604
- WO-A1-00/59683
- DE-B3-102005 016 424
- US-A- 3 447 272

## Beschreibung

**Die Erfindung betrifft eine Vorrichtung mit einer Strahldüse zum Strahlbearbeiten bzw. Strahlen von Gegenständen, wie Bauelemente, Werkzeuge, Haushaltsgegenstände, Töpfe, Pfannen oder dergleichen, mit einem Strahlgemischdepot zur Aufnahme eines Strahlgemischs, das über mindestens eine Leitung mit der Strahldüse verbunden ist, die sich in einen Strahlraum erstreckt, in dem die zu bestrahlenden Gegenstände eingebracht werden können, wobei Druckluft mit Hilfe einer Druckerzeugungseinrichtung oberhalb des im Strahlgemischdepot vorgesehenen Strahlgemischs eingegeben wird und damit das Strahlgemisch in den Strahlraum gepresst wird, wobei die Druckluft über eine zweite Leitung das Strahlgemisch aus dem Strahlraum in das Strahlgemischdepot zurückführt, das als Druckraum ausgebildet ist.** Eine derartige Vorrichtung ist aus US 3,447,272 A bekannt.

Es ist aus der DE 10 2005 016 424 B3 eine Kabine einer Trocken-Strahlanlage zum Fördern von Strahlgemisch bekannt. Das Gehäuse weist ein einen Arbeitsraum bildendes Gehäuseteil, einen das Gehäuseteil nach oben zumindest teilweise verschließenden Deckel und einen das Gehäuseteil nach unten zumindest teilweise verschließenden trichterförmigen Boden zum Auffangen und Sammeln des herabfallenden Strahlgemischs auf. Das Strahlgemisch kann schnell gewechselt und gleichzeitig das Gehäuse mit einem Druckkessel ausgestattet werden. Hierzu weist der Boden mit Bezug auf eine Mittelachse des Gehäuses eine runde oder ovale Querschnittsform mit einer kegelförmigen Mantelfläche auf. Diese Einrichtung betrifft lediglich eine kompakte Lösung für das Trocken-Druckstrahlsystem. Bei dieser Einrichtung befindet sich das Strahlgemisch in dem Druckbehälter und wird in der unterhalb angebrachten Mischkammer der unter gleichem Druck stehenden Strahlluft beigemischt. Das Strahlgemisch wird nicht durch die Druckluft aus dem Behälter gepresst. Der Gleichdruck erlaubt es, dass das Strahlgemisch nach unten mit dem Luftstrom herausrieseln kann.

Sehr feinkörnige, insbesondere mineralische Strahlgemisch wie Korund, Siliziumoxid, Glasmehl, Quarzpulver, Glasperlen usw. lassen sich aus verschiedenen Gründen in trockenen Strahl-Verfahren nur sehr bedingt einsetzen. Einerseits hat man mit einem gewaltigen Staubproblem zu kämpfen und anderseits neigen sehr feine Körnungen dazu, auf der Oberfläche festzukleben und verhindern damit eine gute Strahlwirkung.

Es sind auch Verfahren bekannt, bei denen Strahlgemisch und Wasser vermischt werden. Dieses Gemisch, auch Slurry bezeichnet, wird mit Hilfe einer Zentrifugalpumpe aufbereitet, mittels einer Pumpe einer Strahlpistole zugeführt und dann mit Hilfe von Druckluft dem Gemisch die nötige Strahlenergie vermittelt, mit der das Gemisch auf die zu bestrahlenden Oberflächen geleitet wird. Da die Feststoffbestandteile in dem Gemisch aus Wasser und Strahlmittel sehr schnell absinken, muss das Gemisch dauernd in Bewegung gehalten werden. In vielen Fällen wird hierzu ein Teil des von der Pumpe beförderten Strahlgemischs abgezweigt und in einem besonderen Behälter, der eine Mischeinrichtung aufweist, aufbereitet.

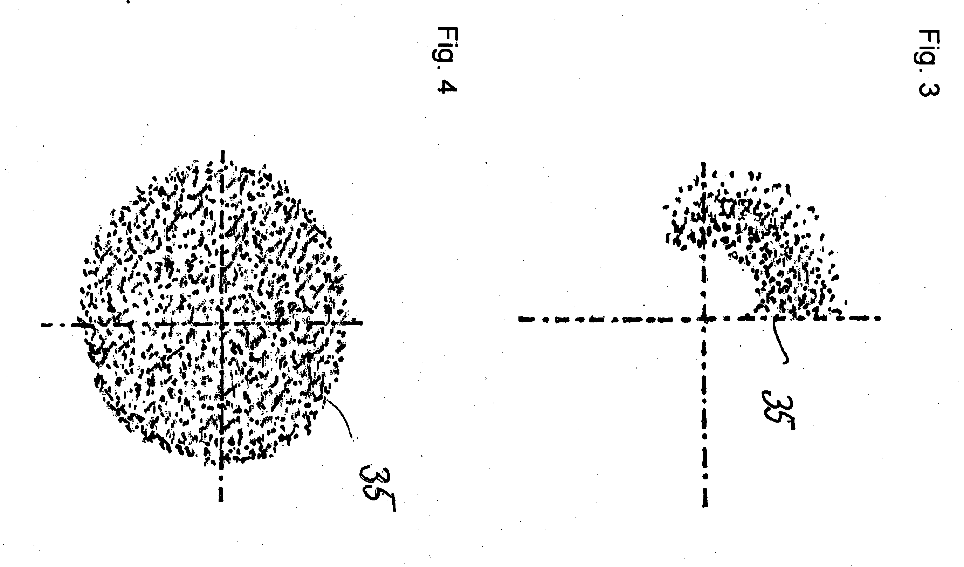

Zentrifugalpumpen unterliegen einem großen Verschleiß. Das Strahlergebnis (Fig. 3) mit den Injektor-Strahlpistolen ist nicht optimal, da nur eine kleine, zentrale Fläche stark und die umgebende Ringfläche bedeutend schwächer bestrahlt wird. Um die Zentrumsfläche zu vergrößern, werden deshalb große Düsen verwendet, was jedoch zu einem großen Druckluft- und somit Energieverbrauch führt.

Versuche mit leistungsstärkeren Pumpen, die einen deutlich höheren Druck aufweisen, um ein Strahlgemisch zu erzeugen und damit die Gegenstände zu bestrahlen, führten zu keinem besseren Ergebnis.

Der Einsatz einer derartigen Pumpe ist schon deshalb sehr nachteilig, da alle dem Verschleiß ausgesetzten Elemente aus Polyurethan gefertigt werden müssten. Je höher der Druck dieser Pumpe ist, desto größer ist auch der Verschleiß und desto geringer der Gesamtwirkungsgrad.

Das schlechte Strahlergebnis liegt insbesondere daran, dass Wasser und Strahlgemisch, insbesondere das Granulat, unterschiedlich große Strömungsgeschwindigkeiten aufweisen und diese noch ansteigen, wenn der Förderdruck der Pumpe erhöht wird. Das Strahlergebnis gemäß Fig. 3 kann nicht wesentlich verbessert werden, da das Wasser mit einer wesentlich höheren Geschwindigkeit auf das zu strahlende Gut auftrifft als das Granulat. Dies liegt auch daran, dass der Mischer das Granulat einseitig nach außen in Richtung Leitungswand drückt und das Wasser mit höherer Geschwindigkeit aus der Düse austritt und das Granulat nur punktartig auf eine kleine Fläche des zu bestrahlenden Guts auftrifft.

Eine derartige Vorrichtung ist insbesondere für eine gleichmäßige gute Verteilung des Strahlgemischs in der Förderleitung und im Bereich des Austrittsendes der Strahldüse nicht vorteilhaft. Ferner ist die Herstellung der bekannten Vorrichtung mit einer besonderen Pumpe zur Förderung des Strahlgemischs aufwändig und teuer und erfordert einen hohen Energieaufwand.

Der Erfindung liegt die Aufgabe zugrunde, eine Strahldüse für eine Vorrichtung zum Strahlbearbeiten bzw. Strahlen von Gegenständen bzw. Werkstücken auf einfache und kostengünstige Weise herzustellen, eine gleichmäßige Verteilung des Strahlgemischs in der Flüssigkeit, insbesondere Wasser, zu gewährleisten, die Effizienz des Strahlvorgangs zu verbessern und damit auch den Energieaufwand zu reduzieren.

Die Aufgabe wird erfindungsgemäß dadurch gelöst, **dass der Vorrichtung eine Mischeinrichtung zugeordnet ist, die aus einem oder mehreren Leitelementen besteht, mit deren Hilfe das Strahlgemisch vermischt und/oder verwirbelt wird, wobei die Mischeinrichtung in Strömungsrichtung gesehen in der Leitung an einer Stelle vor der Strahldüse vorgesehen ist und die Strahldüse einen Düsenkanal aufweist, der eine Einlassöffnung und eine Auslassöffnung aufweist und der Querschnitt des Düsenkanals der Strahldüse über eine große Wegstrecke S₂ zwischen Einlassöffnung und Auslassöffnung in etwa konstant ist und dass die Vorrichtung so aufgebaut ist, dass die Druckluft einzig dazu eingesetzt wird im Strahlgemischdepot Überdruck zu erzeugen, um das Strahlgemisch vom Strahlraum wieder in das Strahlgemischdepot zurückzubefördern.**

Hierdurch wird ein optimales gleichmäßiges Strahlbild auf der Oberfläche eines Werkzeugs erzeugt und dadurch der Strahlungseffekt wesentlich verbessert. Durch Aufspritzen des Strahlgemischs, die aus einer Flüssigkeit, insbesondere Wasser, und darin gleichmäßig verteilten Feststoffen, wie aufrauende, abtragende oder mattierende Stoffe, insbesondere Korund, Siliziumoxid, Glasmehl oder dergleichen, besteht, wird durch Bestrahlen einer Oberfläche eines Werkstücks eine einwandfreie Oberflächenstruktur erzielt. Es können auch glatte oder polierende Stoffe, wie Glasperlen, eingesetzt werden.

Bei der erfindungsgemäßen Anlage wird nicht die bei den meisten Strahlsystemen übliche Druckluft zur Beschleunigung der Strahlmittelkörner verwendet, sondern die Druckluft wird einzig dazu eingesetzt, im Strahlgemisch-Behälter Überdruck zu erzeugen, der das Strahlgemisch zu den Strahldüsen hinauspresst. Die eingesetzte Druckluft wird ferner dazu genutzt, das Gemisch von dem Strahlraum wieder in den Druckbehälter zurückzubefördern. Das Gemisch befindet sich in einem dauernden Kreislauf, deshalb muss auch dafür gesorgt werden, dass auf der Oberfläche des Strahlgemischs ein ständiges Druckluftpolster vorhanden ist. Der Strahlprozess wird ferner dadurch bestimmt, dass stets eine gute Durchmischung der beiden Medien Flüssigkeit und Strahlgemisch sichergestellt wird. Die gute Durchmischung ist ein entscheidender Faktor und durch die erfindungsgemäße Anordnung und Ausbildung der Anlage wird eine Separierung des Strahlguts vermieden.

Hierzu ist es vorteilhaft, dass die Mischeinrichtung aus einem oder mehreren Leitelementen besteht, mit deren Hilfe das Strahlgemisch vermischt und/oder verwirbelt wird.

Dies wird dadurch erleichtert, dass die Leitelemente aus einzelnen schraubenförmigen Elementen bestehen können, die entweder fest miteinander verbunden sind bzw. verschweißt oder zusammengesteckt werden können, wobei die Leitelemente bzw. der statische Mischer so ausgebildet sind, dass sie leicht ausgetauscht werden können.

Dazu ist es vorteilhaft, dass die Mischeinrichtung bzw. die Leitelemente an einer Stelle in der Leitung vor dem Düseneinlass vorgesehen sind.

Es ist weiterhin bevorzugt, dass die Mischeinrichtung in Strömungsrichtung gesehen in der Leitung an einer Stelle vor der Strahldüse vorgesehen ist und die Strahldüse einen Düsenkanal aufweist, der eine Einlassöffnung und eine Auslassöffnung aufweist und der Querschnitt des Düsenkanals der Strahldüse über eine große Wegstrecke zwischen Einlassöffnung und Auslassöffnung in etwa konstant ist.

Ferner ist es vorteilhaft, dass der Düsenkanal der Strahldüse im Einlassbereich einen Querschnitt aufweist, der größer ist als ein Querschnitt, der über die gesamte Wegstrecke des Düsenkanals gleich groß und in etwa rund, oval, mehreckförmig, insbesondere rechteckförmig, ausgebildet ist.

Auch ist es von Vorteil, dass das Verhältnis Höhe zu Breite des Querschnitts des Düsenkanals zwischen 1 zu 4 bzw. 1 zu 3, insbesondere 1 zu 2.5, beträgt.

Es ist weiterhin bevorzugt, dass die Höhe des Querschnitts des Düsenkanals zwischen 2 und 6 mm bzw. zwischen 3 und 5 mm, insbesondere in etwa 4 mm, und die Breite des Querschnitts des Düsenkanals zwischen 7 und 13 mm bzw. 9 und 11 mm, insbesondere etwa 10 mm, beträgt.

Gemäß einer bevorzugten Ausführungsform der erfindungsgemäßen Lösung ist schließlich vorgesehen, dass ein Abstand zwischen dem Auslassende der Strahldüse und der Auftreffstelle des Strahlgemischs auf eine Oberfläche des Werkstücks zwischen 30 und 70 mm oder 40 bis 60 mm, insbesondere etwa 50 mm, beträgt.

Von besonderer Bedeutung ist für die vorliegende Erfindung, dass die Innenoberfläche des Düsenkanals eine polierte bzw. geläppte Fläche aufweist und der Düsenkern aus legiertem Stahl, insbesondere aus Edelstahl, gebildet sein kann.

Im Zusammenhang mit der erfindungsgemäßen Ausbildung und Anordnung ist es auch von Vorteil, dass die Strahldüse aus zumindest zwei zusammensetzbaren Düsenteilen besteht, die mit Hilfe einer Verschraubung zusammen gehalten werden.

Vorteilhaft ist es auch, dass Druckluft mit Hilfe einer Druckerzeugungseinrichtung oberhalb des im Strahlgemischdepot vorgesehenen Strahlgemischs eingegeben wird und damit das Strahlgemisch in den Strahlraum gepresst wird, wobei die Druckluft über eine zweite Leitung das Granulat oder das Strahlgemisch und/oder ein aus Granulat und Flüssigkeit gebildetes Strahlgemisch aus dem Strahlraum in das Strahlgemischdepot zurückführt, das als Druckraum ausgebildet ist. Hierdurch kann auf die bisher notwendige Förderpumpe verzichtet werden, da das aus einer Flüssigkeit, insbesondere Wasser, und Granulat gebildete Strahlgemisch nicht mehr über die bekannte Förderpumpe, sondern nur über Druckluft durch die Förderleitung bewegt wird, sodass das zuvor aufbereitete Strahlgemisch im Strahlgemischdepot gleichmäßig verteilt durch die Förderleitung geleitet wird. Die Druckluft wird nicht in der Strahlanlage bereitgestellt, sondern durch einen externen, stationären Kompressor, der gleichzeitig auch für andere Verfahren eingesetzt werden kann, d. h. nicht nur für eine Strahlanlage konzipiert sein muss.

Vorteilhaft ist das Verfahren mit folgenden Merkmalen:
a) die Strahldüse weist einen Düsenkanal auf, der eine Einlassöffnung und eine Auslassöffnung aufweist und der Querschnitt des Düsenkanals der Strahldüse ist über eine große Wegstrecke zwischen Ein- und Auslassöffnung in etwa konstant bzw. die Wände verlaufen parallel zueinander;
b) auf der gesamten Wegstrecke des Düsenkanals ist der Querschnitt des Düsenkanals in etwa rund, oval, mehreckförmig, insbesondere rechteckförmig, ausgebildet;
c) das Verhältnis Höhe zu Breite des Querschnitts des Düsenkanals beträgt 1 zu 4 bzw. 1 zu 3, insbesondere 1 zu 2.5;
d) der Abstand zwischen dem Auslassende der Strahldüse und der Auftreffstelle des Strahlgemischs auf eine Oberfläche des Werkstücks beträgt zwischen 30 und 70 mm oder 40 bis 60 mm, insbesondere etwa 50 mm.

Eine gleichmäßige Verteilung des Strahlgemischs in der Flüssigkeit ist zur Erzielung einer guten Leistung sehr wichtig. Deshalb ist es vorteilhaft, in der erfindungsgemäßen Vorrichtung einen Mischer, der möglichst geringe zentrifugale Kräfte erzeugt, insbesondere einen statischen Mischer oder einen Mischer mit Rührwerk und der Antriebsvorrichtung, vorzusehen. Der im Strahlgemischdepot vorgesehene Mischer lockert das im unteren Behälterbereich des Strahlgemischdepots angesammelte Granulat auf. Eine senkrecht im Druckbehälter angeordnete Transportschnecke kann auch nach längerem Stillstand der Anlage im vollständig abgesetzten Strahlgemisch ohne weiteres wieder angefahren werden. Mit Hilfe der Rückführleitung zum Druckbehälter wird eine gute und dauerhafte Durchmischung erreicht, da diese unterhalb des Minimalniveaus des Strahlgemischs einmündet. Dadurch strömt bei jedem Rückförderzyklus das Strahlgemisch in den im Druckbehälter vorhandenen Vorrat und bewirkt ohne den Einsatz von Zentrifugalkraft eine einwandfreie Verwirbelung des Strahlgemischs.

Mit einem gut durchmischten Strahlgemisch erhält man beim Strahlvorgang eine gleichmäßige Oberfläche auf dem Teil der Fläche, der bestrahlt worden ist. Das bei Injektorstrahlen übliche Strahlbild mit einer intensiv gestrahlten Kernzone und einer schwach gestrahlten Ringzone tritt bei dem erfindungsgemäßen Verfahren nicht auf. Das Verfahren erlaubt auch den Einsatz von Düsen, die einen fächerförmigen Strahl erzeugen und damit eine optimale Anpassung an die jeweilige Strahlaufgabe ermöglichen.

Da die Druckluft nur zum Herauspressen des Strahlgemischs aus den Strahldüsen und zum Rücktransport des Strahl-Gemischs in den Druckbehälter dient und somit nicht am Strahlprozess beteiligt ist, lassen sich mit der erfindungsgemäßen Anlage Energiekosten bis zu 80% einsparen.

Mit Hilfe der erfindungsgemäßen Vorrichtung kann auch auf den bisher üblichen Zentrifugalmischer verzichtet werden, der auch dazu beiträgt, dass das Strahlgemisch gleichmäßig durchmischt wird. Da der Energieaufwand zur Erzeugung des in der Vorrichtung erforderlichen Arbeitsdrucks nun über einen externen Kompressor bereitgestellt und damit in die Leitung Luftförderstrom geleitet wird, mit dessen Hilfe das gleichmäßig verteilte Strahlgemisch auch bis zum Auslassende der Strahldüse gelangt, kann eine wesentlich größere Arbeitsfläche auf der Oberfläche des zu bestrahlenden Gegenstandes gleichmäßig bearbeitet werden. Selbst bei Verwendung von Strahldüsen mit großer Aufspreizung des Düsenstrahls wird eine gleichmäßige Strahlbearbeitung der Oberfläche sichergestellt.

Mit Hilfe der erfindungsgemäßen Vorrichtung können Gegenstände aufgeraut, abgetragen, entgratet, mattiert, geglättet werden. Hierzu wird ein Strahlgemisch aus einer Flüssigkeit und einem mineralischen Strahlgemisch eingesetzt. Es können damit Bearbeitungswerkzeuge, Messwerkzeuge, Feinmechanik und auch Gegenstände aus dem Haushalt bearbeitet werden.

Hierdurch erhält man eine sehr gute Durchmischung des Strahlgemischs d. h. eine Aufschwemmung der feinstverteilten festen Stoffe, wie Granulat, in einer Flüssigkeit und damit eine wesentlich verbesserte Strahlleistung, d. h., die Oberfläche wird gegenüber den bekannten Strahlmustern wesentlich gleichmäßiger und intensiver behandelt, da das Strahlgemisch aufgrund der sehr guten Durchmischung von Flüssigkeit, insbesondere Wasser, und Granulat, auch eine große kinetische Energie aufweist, was bei Trocken-Strahlverfahren so nicht möglich war. Bei Einsatz der erfindungsgemäßen Anlage und des erfindungsgemäßen Verfahrens können bis zu 80% Energiekosten bei größerer Flächenleistung erreicht werden.

Hierzu ist es vorteilhaft, dass die aus dem Strahlraum und zumindest dem Strahlgemischdepot bestehende Anlage als geschlossenes Drucksystem ausgebildet ist, das im Arbeitseinsatz unter einem Arbeitsdruck, insbesondere unter Gas- oder Druckluft, steht, der zumindest im Arbeitsprozess und zumindest im Strahlgemischdepot auf der aus einer Flüssigkeit und einem Strahlgemisch gebildete Strahlgemisch und/oder dem Granulat lastet und dass die Anlage, insbesondere der Strahlraum, an die Druckerzeugungseinrichtung bzw. einen Kompressor und/ oder eine Druckluftzufuhrleitung angeschlossen ist, wobei zur Förderung des aus einem Strahlgemisch, insbesondere Granulat, gebildeten Strahlgemischs die Druckmittelleitung vorgesehen ist, deren Einlassseite sich im Arbeitsprozess in das im Strahlgemischdepot vorgesehene Strahlgemisch erstreckt, auf die die Druckluft wirkt, wobei das Auslassende der Druckmittelleitung eine oder mehrere Strahldüsen aufweist, die im Strahlraum platziert sind.

Ferner ist es vorteilhaft, dass der Strahlraum in seinem unteren Bereich einen Sammelraum, insbesondere eine oder mehrere Druckschleusen, aufweist, in dem das zur Strahlung verwendete Strahlgemisch aufgefangen wird und in den sich ein Einlassende der Rücklaufleitung erstreckt, die mit dem Strahlgemischdepot in Verbindung steht und deren Auslassende sich im unteren Bereich des Strahlgemischdepots befindet oder sich im Arbeitsprozess unterhalb des Niveaus des im Strahlgemischdepot aufgenommenen Strahlgemischs erstreckt.

Der Strahlraum im unteren Bereich, insbesondere im Bereich der Druckschleusen weist einen ersten und zweiten Sensor auf, wobei der erste bzw. obere Sensor die zulässige maximale Füllhöhe und der zweite bzw. untere Sensor die minimale untere Befüllgrenze anzeigt, während das Strahlgemischdepot ebenfalls im unteren Bereich einen dritten Sensor und im oberen Bereich einen vierten Sensor aufweist, wobei der vierte bzw. obere Sensor die maximal zulässige Füllhöhe und der dritte bzw. untere Sensor die minimale Befüllgrenze für das Strahlgemisch anzeigt.

Damit beim Strahlen nicht große Mengen der Flüssigkeit durch die Druckluft verdampfen, wird die Anlage in komplett geschlossenem Kreislauf betrieben. Hierdurch können dem Strahlgemisch auch Additive zugefügt werden, sodass neben der mechanischen Einwirkung auf die Oberfläche des zu behandelnden Guts bzw. Werkstücks mit Hilfe des Strahlgemischs auch eine chemische Einwirkung auf der Oberfläche erreicht wird.

Das Strahlgemisch, das sich in einem stetigen Haupt- Kreislauf befindet, kann auch teilweise einem geschlossenen Nebenkreislauf zugeführt werden, zu dem der zyklonartige Schlammabscheider gehört. Mit Hilfe des Nebenkreislaufs wird fortlaufend eine regelbare Menge des Wassers zur Reinigung abgezweigt. Der Schlammabscheider ist hierzu an das Strahlgemischdepot mit einem Steigsichter angeschlossen. Hier steigt mit Hilfe des im Behälter herrschenden Überdrucks die Flüssigkeit auf. Die abfließende Menge wird durch ein Drosselventil so geregelt, dass die leichteren Partikel, also Verunreinigungen, langsamer absinken als das eingesetzte Strahlgemisch. Das Ausscheiden dieser Partikel erfolgt in einem drucklosen, umgekehrten Prozess in dem zyklonartigen Abscheider. Die gereinigte Flüssigkeit fließt wieder in den Strahlraum und somit in den Kreislauf zurück.

Vorteilhaft ist es, wenn periodisch das Verhältnis von Wasser und Strahlgemisch überprüft wird und im Bedarfsfall Additive zugesetzt werden. Hierzu ist es vorteilhaft, dass der Druckbehälter mit einem schaltbaren Ventil ausgestattet ist, sodass kleine Mengen Strahlgemisch abgezogen werden können.

Je nach Mischungsverhältnis werden Additive zugesetzt und damit auch der chemische Zustand des Strahlgemischs beeinflusst.

Weitere Vorteile und Einzelheiten der Erfindung sind in den Patentansprüchen und in der Beschreibung erläutert und in den Figuren dargestellt.

Dabei zeigen:
- Fig. 1: ein erstes Ausführungsbeispiel einer Vorrichtung zum Strahl bearbeiten bzw. Strahlen von Gegenständen, wie Bauelemente, Werkzeuge, Haushaltsgegenstände, Töpfe, Pfannen oder dergleichen, mit einem Strahlgemischdepot zur Aufnahme von Strahlgemisch;
- Fig. 2: weitere Ausführungsbeispiele einer Vorrichtung bzw. einer Gesamtanlage zum Strahlbearbeiten bzw. Strahlen von Gegenständen, ähnlich wie in Fig. 1 in Seitenansicht und teilweise in Draufsicht, jedoch mit zwei parallel wirkenden Sammelräumen oder Druckschleusen, wobei das Strahlgemischdepot gemäß Abbildung 2 in den Schnitten A-A, B-B und C-C sowie in 2 in Draufsicht dargestellt ist;
- Fig. 3: ein Strahlmuster auf der Oberfläche eines bearbeiteten Gegenstandes nach dem Stand der Technik;
- Fig. 4: ein Strahlmuster, das mit der erfindungsgemäßen Vorrichtung erreicht wird;
- Fig. 5 a bis 5d: verschiedene Ausführungsformen einer Düse, wobei
- Fig. 5d: einen Schnitt entlang der Linie A-B gemäß Fig. 5b zeigt und
- Fig. 5e + 5f: die Leitelemente bzw. den statischen Mischer.

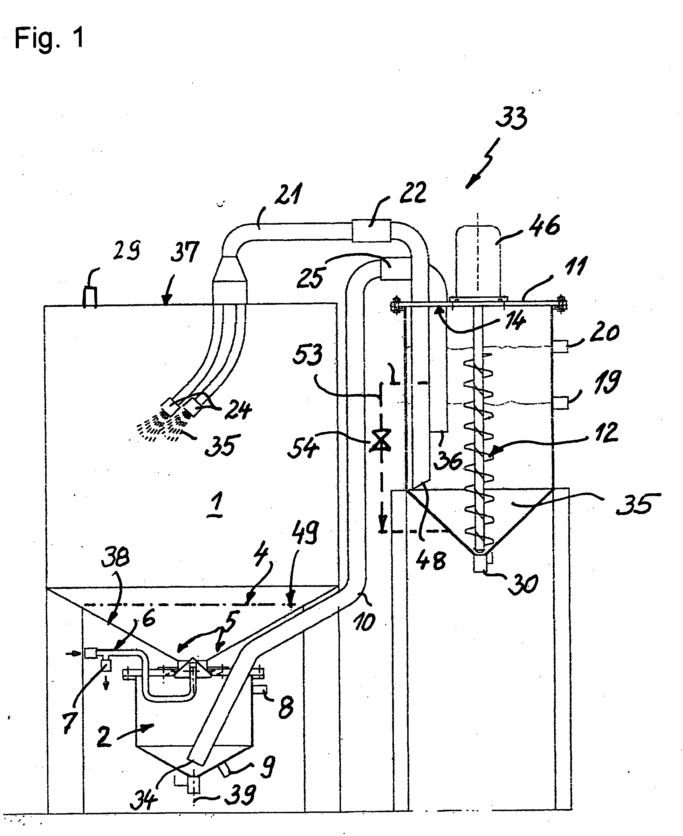

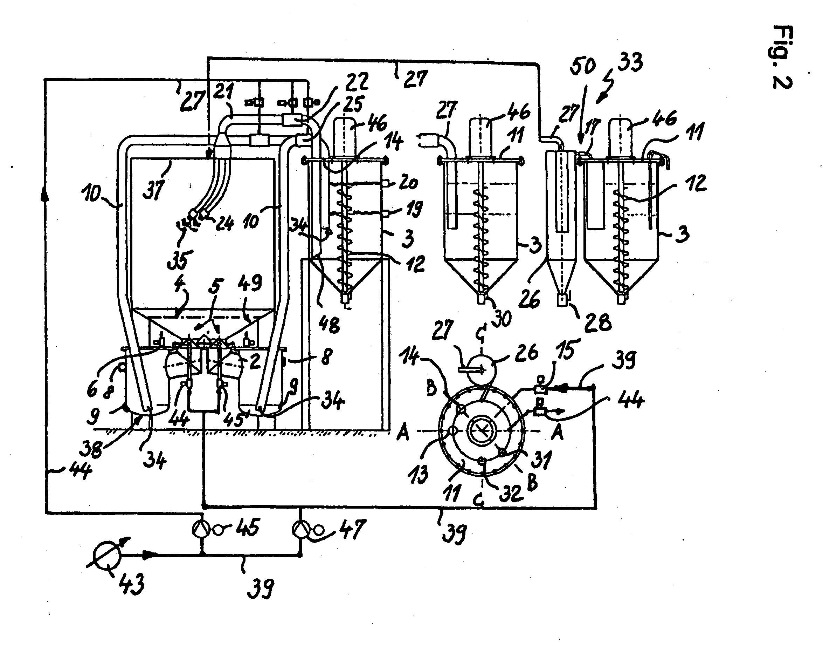

In Fig. 1 und 2 ist eine Vorrichtung 33 zum Strahlbearbeiten bzw. Strahlen von Gegenständen, wie Bauelemente, Werkzeuge, Haushaltsgegenstände, Töpfe, Pfannen dargestellt und mit einem Strahlgemischdepot 3 versehen, das zur Aufnahme von Strahlgemisch 35 dient. In Fig. 2 ist das Strahlgemischdepot 3 in Seitenansicht und in Fig. 2 in einer Draufsicht dargestellt, damit die Anschlüsse der einzelnen Leitungen besser erkennbar sind.

Der Vorrichtung 33 ist eine Mischeinrichtung 52, wie nachstehend näher beschrieben, zugeordnet, die im Bereich einer Leitung 21 einer Strahldüse 24 oder in oder vor der Einlassöffnung der Strahldüse 24 vorgesehen sein kann.

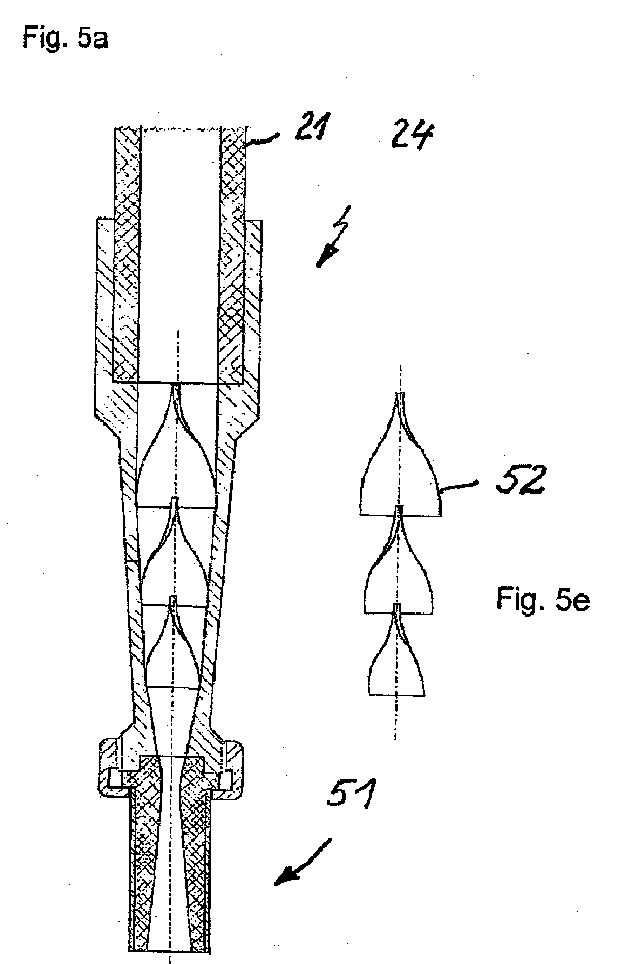

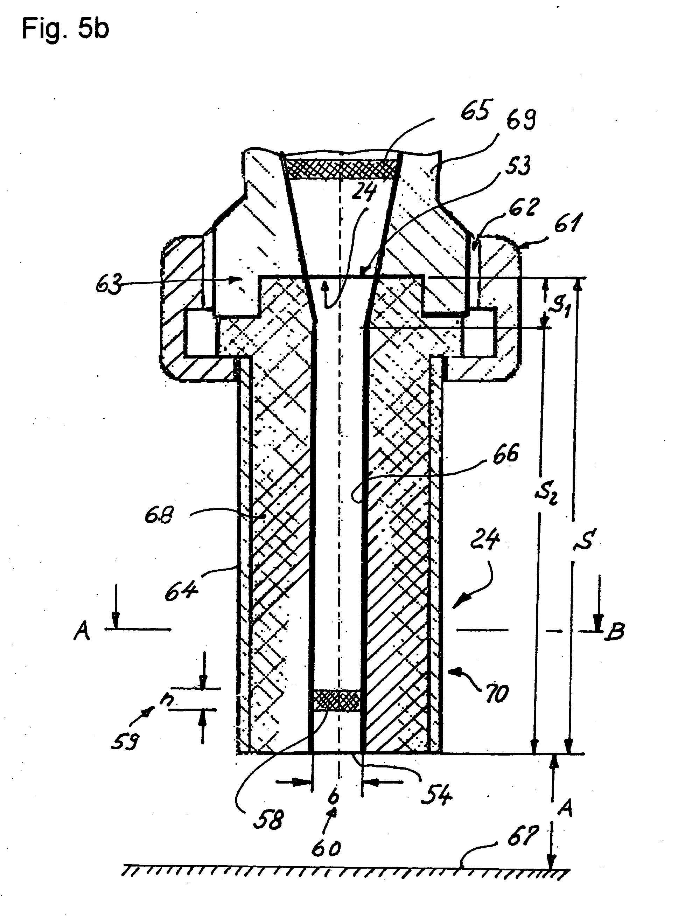

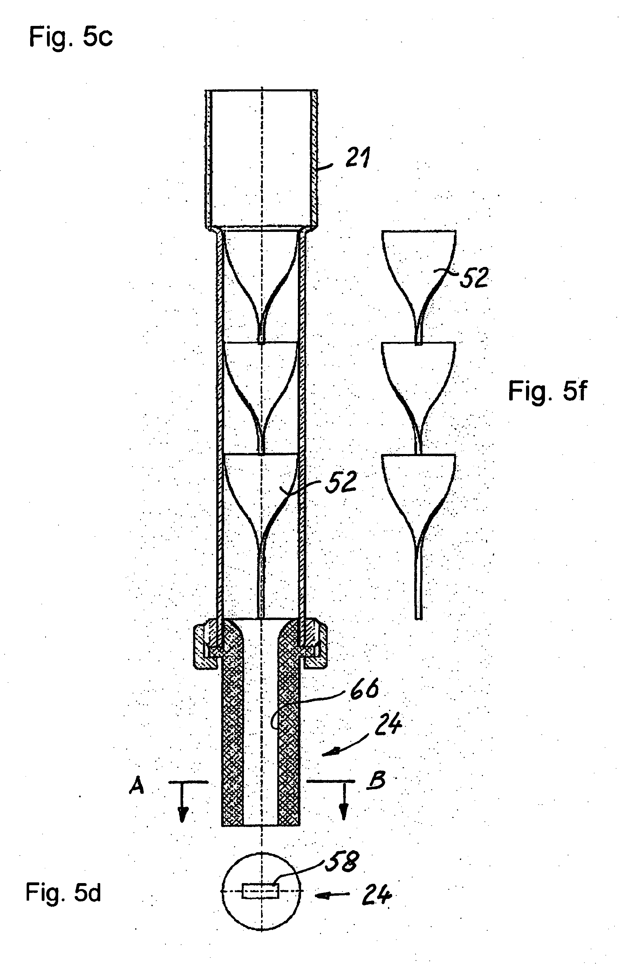

Ein Strahlraum 1 kann als rechteckförmiges (Fig. 1) oder auch zylinderförmiges Gehäuse ausgebildet und mit einem Deckel 37 ausgestattet sein, der mit einem Leitungsanschluss 29 für ein in der Zeichnung nicht dargestelltes Gebläse mit Wasserdampfabscheider verbunden ist. Ferner ist das Strahlgemischdepot 3 zur Aufnahme von Strahlgemisch 35 über mindestens eine Leitung 21 mit dem Strahlraum 1 verbunden. Die Leitung 21 weist gemäß Fig. 5 eine oder mehrere Strahldüsen 24 auf, die sich in den Strahlraum 1 erstrecken und mit deren Hilfe das zu bestrahlende Gut mit Strahlgemisch 35 beaufschlagt werden kann.

Der Strahlraum 1 kann im unteren Bereich als Trichter ausgebildet und mit einem Sieb 4 ausgerüstet sein, das das Eindringen von Fremdkörpern in den Kreislauf verhindert.

Am unteren Ende des Trichters des Strahlraums 1 sind mindestens ein, insbesondere zwei, automatisch schaltbare Ventile 5 angebracht, die einen kegelförmigen Ventilkörper aufweisen, der lose auf einem Rohr sitzt und beim Einströmen von Druckluft über eine Leitung 6 in eine Schleuse 2 nach oben verstellt wird. Wird die Druckluftzufuhr nach Entlüften des Sammelraums, insbesondere Druckschleuse 2, unterbrochen, fällt der kegelförmige Ventilkörper wieder auf seinen Ventilsitz zurück.

Die Druckschleuse 2 arbeitet im Taktbetrieb und muss so viel Strahlgemisch 35 aufnehmen, wie in einem Arbeitstakt aus der Strahldüse 24 heraustritt. Die Schleuse kann unterschiedlich ausgebildet sein. Sie kann, je nach Platzverhältnissen, direkt unterhalb des automatischen Ventils 5 angebracht sein, oder seitlich herausragen.

Die Schleuse weist, wie bereits erwähnt, für den Drucklufteintritt mindestens ein schaltbares Ventil 5 und für die Entlüftung mindestens ein schaltbares Ventil 7 auf.

Die Strahldüsen 24 können als Rund-, Oval- oder vorzugsweise als Flachdüsen ausgebildet sein. Sind mehrere Strahldüsen 24 vorgesehen, so kann eine größere Leistung erreicht werden.

Die Strahldüse 24 ist nach einem Ausführungsbeispiel gemäß Fig. 5a bis 5c an die Leitung 21 angeschlossen, die einen runden oder auch einen anderen Querschnitt, ähnlich wie die Strahldüse 24 aufweisen kann. Gemäß Fig. 5a schließt sich an die Leitung 21 ein sich kontinuierlich verjüngendes bzw. konisches Leitungsstück bzw. Düsenteil 69 oder gemäß Fig. 5c die Leitung 21 mit gleichbleibend großem Querschnitt an.

Die Strahldüse 24 kann gemäß Ausführungsbeispiel Fig. 5a als zylindrische Runddüse, als Runddüse mit konischer Erweiterung 51 oder als Flachdüse ausgebildet sein. Die Formgebung der Strahldüse 24 wird durch die Strahlaufgabe bestimmt und kann auch andere Formen aufweisen.

In der Strahldüse 24 können gemäß Fig. 5a bis 5c eine oder mehrere Leitelemente bzw. der statische Mischer 52 vorgesehen sein, die zur Verbesserung des Strahlbildes gemäß Fig. 4 beitragen und für eine noch intensivere Vermischung von Flüssigkeit und Granulat sorgen. Die Leitelemente bzw. der statische Mischer 52 können aus einzelnen schraubenförmigen Elementen bestehen, die entweder fest miteinander verbunden bzw. verschweißt sind oder zusammengesteckt werden können. Die Strahldüse 24 und/oder die Leitelemente bzw. der statische Mischer 52 sind so ausgebildet, dass sie leicht ausgetauscht werden können.

In die Düsenhalterung kann eine Stahl-, Keramik-, Hartmetall-, Borkarbid- oder Polyamidwerkstoffdüse eingesetzt und mit Hilfe eines Befestigungsmittels, insbesondere einer Überwurfmutter 61, gemäß Fig. 5a bis 5c an der Leitung 21 gesichert bzw. lösbar angeschlossen werden.

In die Düsenhalterung bzw. in die Leitung 21 (Fig. 5a, 5c) kann der statische Mischer 52 derart integriert werden, dass das Strahlgut abwechselnd nach links und nach rechts geleitet wird. Vorteilhaft ist es, wenn eine oder mehrere, vorzugsweise drei, Mischer-Elemente eingesetzt werden, die leicht auswechselbar sein müssen, da sie großem Verschleiß unterliegen. Der Mischer 52 kann so ausgebildet sein, dass er nach Entfernen der Strahldüse 24 aus der Leitung 21 gezogen werden kann.

In den Fig. 5b und 5c sind zwei weitere Alternativen dargestellt, wobei die Ausführungsform nach Fig. 5c die bevorzugte Ausführungsform ist. Die beiden Ausführungsformen unterscheiden sich nur geringfügig von einander. Nach Fig. 5b ist die Leitung 21 bzw. das Leitungsteil wie in Fig. 5a konisch ausgebildet, während nach der Ausführungsform Fig. 5c die Leitung 21 bzw. das Leitungsteil über ihre gesamte Länge einen gleich großen Querschnitt aufweist.

Die Strahldüse 24 besteht aus einem Düsenkern 68 mit einer Ummantelung 64 und weist einen Düsenkanal 66 auf, der eine Einlassöffnung 53 und eine Auslassöffnung 54 aufweist. Auf einer gesamten Wegstrecke S₂ zwischen Einlassöffnung 53 und Auslassöffnung 54 kann ein Querschnitt 58 des Düsenkanals 66 konstant sein bzw. seine Innenwände parallel zueinander verlaufen. Ferner kann der Querschnitt 58 in etwa rund, oval, mehreckförmig, insbesondere rechteckförmig, ausgebildet sein.

Der Düsenkanal 66 der Strahldüse 24 kann im Einlassbereich einen Querschnitt 65 aufweisen, der größer ist als der Querschnitt 58, der über die gesamte Wegstrecke S₂ des Düsenkanals 66 gleich groß ist.

Gemäß Fig. 5b kann das Verhältnis Höhe 59 zu Breite 60 des Querschnitts 58 des Düsenkanals 66 1 zu 4 bzw. 1 zu 3, insbesondere 1 zu 2.5, betragen.

Die Höhe 59 des Querschnitts 58 des Düsenkanals 66 beträgt zwischen 2 und 6 mm bzw. zwischen 3 und 5 mm, insbesondere in etwa 4 mm, und die Breite 60 des Querschnitts 58 des Düsenkanals 66 zwischen 7 und 13 mm bzw. 9 und 11 mm, insbesondere etwa 10 mm.

Der Abstand A zwischen dem Auslassende 54 der Strahldüse 24 und der Auftreffstelle des Strahlgemischs 35 auf eine Oberfläche 67 des Werkstücks beträgt etwa zwischen 30 und 70 mm oder 40 bis 60 mm, insbesondere etwa 50 mm.

Die Innenoberfläche des Düsenkanals 66 kann eine polierte bzw. geläppte Fläche aufweisen und der Düsenkern 68 aus einem legierten Stahl, insbesondere aus Edelstahl, gebildet sein.

Durch den Mischer wird gemäß Fig. 1 der Strahlgemischsfluss mehrfach getrennt und abwechselnd nach links und nach rechts verwirbelt. Hierzu ist es vorteilhaft, wenn in den Mischer mindestens drei Mischelemente eingesetzt werden. Diese können zu einem Bausatz zusammengefasst bzw. miteinander verschweißt sein und dann eingebaut werden. Da die Mischelemente 52 einem gewissen Verschleiß unterliegen, ist es vorteilhaft, dass sie leicht auswechselbar sind.

Der Druckkessel 3 zur Aufnahme eines Mischers 12 kann im unteren Bereich konisch ausgebildet sein. Hierdurch beschleunigt das Strahlgemisch während des Mischvorgangs kontinuierlich in Richtung nach unten.

Nach einer weiteren Variante kann an den unteren Teil des Strahlgemischdepots 3 eine Leitung 72 mit mindestens einem Ventil 73 angeschlossen werden, sodass bei Inbetriebnahme bzw. Anfahrzustand der Anlage in diesem Bereich Luft oder falls erforderlich auch Wasser zugeführt wird, sodass dort das gesammelte Gemisch im Strahlgemischdepots 3 aufwirbelt und dadurch insgesamt noch besser vermischt. Während des laufenden Prozesses wird die Leitung über das Ventil 50 wieder geschlossen, entweder von Hand oder aufgrund eines Steuerbefehls einer in der Zeichnung nicht dargestellten Rechenanlage. Überschüssige Luft kann, falls erforderlich, mit Hilfe eines in der Zeichnung nicht dargestellten Ventils aus der Anlage abgegeben werden.

Je nach Ausführungsform kann auch auf den Mischer 12 verzichtet werden und, wie beschrieben, lediglich mit Hilfe von Luft das Strahlgemisch aufgemischt werden.

Ferner ist es vorteilhaft, wenn in einem internen Wasserkreislauf gearbeitet und eine außerhalb des Kessels liegende in der Zeichnung nicht dargestellte Membranpumpe eingesetzt wird.

Bei dieser Anordnung saugt die Pumpe das Wasser an, wobei eine Einlassseite 48 der Leitung 21 nur wenig unterhalb des Minimalniveaus im Druckkessel vorgesehen ist.

Beim Anfahren der Anlage wird mit klarem Wasser gearbeitet und bei längerem Betrieb weist die Anlage geringste Strahlgemisch-Konzentration auf. Die Druckleitung 21 kann bis an den tiefsten Punkt im Druckkessel 3 geführt werden.

Diese Anlage kann unabhängig von den Druckverhältnissen arbeiten, das heißt, sie funktioniert unabhängig davon, ob der Druckkessel 3 unter Druck steht, oder drucklos ist.

Mit Hilfe einer entsprechenden Steuerung arbeitet die Anlage absolut sicher. Selbst nach wenigen Stunden der Betriebsunterbrechung, kann ohne besondere Vorkehrungen die Anlage jederzeit gestartet werden. Nach einem Stillstand von einigen Tagen ist es vorteilhaft, wenn die Pumpe ca. eine Stunde läuft und die Saugleitung in klarem Wasser liegt, sodass die Pumpe und die Rohrverbindungen mit klarem Wasser durchgespült werden.

Der Einsatz einer Membranpumpe bringt optimale Ergebnisse. Auch bei wochenlangem Stillstand der Anlage ist nach wenigen Minuten wieder eine gute Durchmischung des Strahlgemischs erreicht. Die Anlage ist hierdurch sehr unkompliziert und kostengünstig und weist vor allen Dingen einen sehr geringen Verschleiß auf.

In die Düsenhalterung kann eine Stahl-, Keramik-, Hartmetall-, Borkarbid- oder Polyamidwerkstoffdüse eingesetzt und mit Hilfe eines Befestigungsmittels, insbesondere einer Überwurfmutter 61, an der Leitung 21 gesichert werden.

Das Strahlgemisch 35 wird mit Hilfe einer Druckerzeugungseinrichtung 43 in das Strahlgemischdepot 3 gepresst. Die Druckerzeugungseinrichtung 43 kann ein Kompressor sein, der über eine Druckleitung 39 und ein Schaltventil 15 an einen Deckel 11 des Strahlgemischdepots 3 angeschlossen ist und der Anlage bzw. dem Strahlgemischdepot 3 Druckluft zuführt, sodass über die Leitung 21 das Strahlgemisch 35 dem Strahlraum 1 zugeführt bzw. in diesen gepresst wird.

Ferner ist eine zweite Leitung 10 vorgesehen, die das Granulat oder das Strahlgemisch und/oder ein aus Granulat und Flüssigkeit gebildetes Strahlgemisch aus dem unteren Bereich des Strahlraums 1 bzw. aus einem an den Strahlraum 1 angeschlossenen Sammelraum, insbesondere Druckschleuse 2, in das Strahlgemischdepot 3 zurückführt, das ebenfalls als Druckraum ausgebildet ist. Die zweite Leitung 10 weist hierzu eine erste Einlassseite 34 auf, die kurz vor einem unteren Boden 38 der Druckschleuse 2, endet und dadurch stets in das aus der Strahldüse 24 ausgeschiedene Strahlgemisch eingetaucht ist, sodass dadurch die Druckluft das Strahlgemisch in das Strahlgemischdepot 3 zurückführen kann, wenn die Anlage in Betrieb ist.

Die aus dem Strahlraum 1 und zumindest dem Strahlgemischdepot 3 bestehende Anlage ist als geschlossenes Drucksystem ausgebildet, das im Arbeitseinsatz unter einem Arbeitsdruck, insbesondere unter Gas- oder Druckluft, steht, der zumindest im Strahlgemischdepot 3 ständig auf dem aus Flüssigkeit und Strahlgemisch gebildeten Strahlgemisch lastet. Dadurch wird auch sichergestellt, dass sich die Druckluft nicht mit dem Strahlgemisch vermischt, sondern nur als Fördermittel dient.

Die Schleuse 2 des Strahlraums 1 weist im unteren Bereich einen ersten Sensor 8 und einen zweiten Sensor 9 auf, wobei der erste bzw. obere Sensor 8 die zulässige maximale Füllhöhe und der zweite bzw. untere Sensor 9 die minimale untere Befüllgrenze anzeigt, während das Strahlgemischdepot 3 ebenfalls im unteren Bereich einen dritten Sensor 19 und oberen Bereich einen vierten Sensor 20 aufweist, wobei der vierte bzw. obere Sensor 20 die maximal zulässige Füllhöhe und der dritte bzw. untere Sensor 19 die minimale Befüllgrenze für das Strahlgemisch anzeigt.

Im Strahlgemischdepot 3 ist eine Mischeinrichtung, insbesondere das Rührwerk 12 mit einer Antriebsvorrichtung 46 vorgesehen, das sich bis in den unteren Bereich des Strahlgemischdepots 3 erstreckt, wobei sich der untere Bereich des Strahlgemischdepots 3 nach unten verjüngt, insbesondere trichterförmig ausgebildet ist. In dem trichterförmigen Teil 49 des Strahlgemischdepots 3 befindet sich ein Schaltventil, insbesondere Handventil 30, über das das Strahlgemischdepot 3 entleert werden kann.

Dem Strahlgemischdepot 3 ist ein Schlammabscheider, insbesondere ein Zyklon-Abscheider 26, zugeordnet, der über eine Leitung 17 oder einen Sekundärkreislauf mit dem Strahlgemischdepot 3 und über eine Rücklaufleitung 27 mit dem Strahlraum 1 verbunden ist, sodass gereinigte Flüssigkeit, insbesondere Wasser, dem Strahlraum 1 wieder zugeführt werden kann.

Gemäß Fig. 2 kann die Anlage mit zwei oder mehreren Druckschleusen 2 ausgestattet sein, um die Betriebssicherheit und Leistung der Anlage zu vergrößern.

Die Anlage bzw. der Strahlraum 1 arbeitet wie folgt: Bei Verwendung nur der Druckschleuse 2 gemäß Fig. 1 muss die Verbindung zwischen Druckbehälter 3 und Druckschleuse 2 durch ein Quetschventil 22 und ein Ventil 25 für den Befüllvorgang unterbrochen werden. Kurzzeitig muss das Ventil, insbesondere Entlüftungsventil 44, geöffnet werden, womit ein kleiner Druckluftverlust verbunden ist. Bei Verwendung der Druckschleuse 2 schwankt das Füllniveau im Druckkessel 3 in Abhängigkeit des Volumens des Strahlgemischs in der Druckschleuse 2.

Bei Ausrüstung einer Anlage mit zwei Druckschleusen 2 verändert sich das Niveau in der Druckschleuse 2 nur geringfügig. Die Menge des durch die Strahldüsen 24 abfließenden Strahlgemischs wird kontinuierlich über die Druckschleusen 2 zurücktransportiert. Je nach Arbeitsbedingungen ist immer eine Druckschleuse 2 mit dem Druckkessel 3 gekoppelt, während die andere Druckschleuse 2 befüllt werden kann. Der Strahlraumraum 1, insbesondere eine oder mehrere Druckschleusen 2, sind über die Leitung 39 und das Schaltventil, insbesondere elektromagnetisches Schaltventil 15, an den Deckel 11 des Strahlgemischdepots 3 angeschlossen. An die Leitung 39 ist der Kompressor 43 angeschlossen.

Ein weiteres Schaltventil 16 kann je nach Bedarf am Druckbehälter angeschlossen werden, um einen Druckaufbau in der Anlage vornehmen zu können, der normalerweise über die an den Sammelraum, insbesondere Druckschleuse 2, angeschlossene Leitung 39 erfolgt, die hierzu mit Schaltventilen 45, 47 ausgestattet ist. Die Schaltung des Ventils 5 ist in den Beispielen gemäß Fig. 1 und 2 gleich. Zur Druckerhöhung während des Arbeitsprozesses ist die Leitung 39 und das Ventil 45 sowie die Leitung 44 an den oberen Deckel 37 des Strahlraums 1 angeschlossen.

Das Füllniveau verändert sich im Druckbehälter normalerweise nur geringfügig, da die eingeführte Strahlgemischmenge und die zum Strahlgemischdepot 3 rücktransportierte Strahlgemischmenge in etwa gleich ist. Je nach Arbeitsbedingung ist es auch möglich, die Strahldüse 24 direkt mit Strahlgemisch aus dem Sammelraum, insbesondere der Druckschleuse 2, zu speisen. Vorteilhaft ist es jedoch, das Stahlgemisch aus dem Druckbehälter einzusetzen, um eine ständige Durchmischung der Strahlgemischmenge sicherzustellen. Beim Abschalten der Anlage muss die Druckschleuse 2 die gesamte Strahlgemischmenge aufnehmen.

Da sich die Feststoffe in dem Strahlgemisch in kurzer Zeit im Behälter stark nach unten konzentrieren und in einigen Stunden eine feste Masse auf dem Boden des Behälters bzw. des Strahlgemischdepots 3 bilden können, sind am Strahlgemischdepot 3 alle Anschlüsse oben im Deckel 11 vorgesehen. Bei abgeschaltetem Prozess erfolgt die Sedimentation im Behälter, sodass keine Blockaden in den Ventilen und Rohren entstehen können.

Vorteilhaft ist es, wenn mit Hilfe einer Kontrolleinrichtung, wie Sensoren, die Druckschleuse im unteren Bereich besonders überwacht und dadurch sichergestellt wird, dass bei Auftreten einer Störgröße die Kontrolleinrichtung ein optisches und/oder akustisches Signal ausgibt und eine automatische Entleerung des Sammelraums, insbesondere der Druckschleuse 2, einleitet.

Der Druckbehälter bzw. das Strahlgemischdepot 3 ist mittels des massiven glatten Deckels 11 abgedichtet. Auf dem Deckel 11 sind verschiedene Armaturen sowie die Lagerung für einen Mischer bzw. das Rührwerk 12 mit Antrieb 46 vorgesehen.

Die Rückführung der Strahlgemisch 35 erfolgt über die Leitung 10 und einen Anschluss 14 im Deckel 11. Das Ventil 15 ist bei Einsatz nur einer Druckschleuse 2 dauernd offen, da das Niveau im Druckkessel 3 schwankt. Bei der Verwendung von zwei Druckschleusen 2 bleibt das Ventil 15 dauernd geschlossen. Über die Leitung 39 und das Ventil 15 erfolgt der Druckaufbau.

Mit Hilfe eines am Deckel 11 vorgesehenen Ventils 32 kann auch während des Arbeitsprozesses eine Probe entnommen werden.

Diese konzentrierte Anordnung der Anschlüsse und Kontrolleinrichtungen auf dem Deckel 11 bietet je nach den Bedürfnissen unterschiedlich große Abmessungen für den Druckbehälter.

Zur Reinigung der Flüssigkeit im Strahlgemischdepot 3 ist am Deckel 11 ein Steigrohr 18 befestigt, das über die Leitung 17 mit dem Zyklonabscheider 26 verbunden ist.

Die Leitung 21 weist das Quetschventil 22 auf, über das die Strahldüsen 24 zugeschaltet werden können. Für die Rückführung des Strahlgemischs 34 über die Leitung 10 wird ein identisches Quetschventil 25 geschaltet, das in der Leitung 10 vorgesehen ist.

Eine verhältnismäßig langsam drehende Rührschnecke 42 des im Druckbehälter vorgesehenen Mischers 12 kann auch dann anlaufen, wenn sich eine feste Masse auf dem Boden des Strahlgemischdepots 3 gebildet hat. Eine Schnecke als Rührwerk hat geringe separierende Wirkung gegenüber einem schnell drehenden Quirl. Die permanente Durchmischung wird aber auch dadurch unterstützt, dass das zurückströmende Strahlgemisch in der Druckschleuse den Mischprozess unterstützt. Die Austrittsöffnung im Sammelraum, insbesondere der Druckschleuse 2, ist deshalb unterhalb des Minimalniveaus im Druckbehälter vorgesehen. Der Sammelraum, insbesondere die Druckschleuse 2, kann über das Ventil 7 und der Zyklon-Abscheider 26 über ein Ventil 28 entleert und der abgesetzte Schlamm abgelassen werden. Über ein am Strahlgemischdepot 3 vorgesehenes Ventil 30 können während des Arbeitsprozesses Proben aus dem Strahlgemischdepot 3 entnommen werden.

### Bezugszeichen

- 1: Strahlraum
- 2: Sammelraum, Druckschleuse
- 3: Strahlgemischdepot, (Druckkessel, Druckbehälter)
- 4: Sieb
- 5: schaltbares Ventil
- 6: Leitung, Drucklufteinlass
- 7: Ventil zur Entleerung bzw. Entlüftung der Druckschleuse
- 8: erster Sensor, oberer Sensor
- 9: zweiter Sensor, unterer Sensor
- 10: Rücklaufleitung
- 11: Deckel
- 12: Rührwerk mit Antriebsvorrichtung 46, Mischer
- 13: Druckluftzufuhrleitung
- 14: Anschluss für die Rückführleitung des Strahlgemischs
- 15: Schaltventil
- 16: Schaltventil
- 17: Leitung
- 18: Steigrohr
- 19: dritter Sensor, unterer Sensor
- 20: vierter Sensor, oberer Sensor
- 21: Leitung, Druckmittelleitung
- 22: Ventil, Quetschventil
- 24: Strahldüse
- 25: Ventil, Quetschventil
- 26: Zyklon-Abscheider
- 28: Ventil am Zyklon-Abscheider
- 27: Rücklaufleitung
- 29: Leitungsanschluss für ein Gebläse mit Wasserdampfabscheider
- 30: Ventil, Schaltventil, Handventil
- 31: Sicherheitsventil
- 32: Ventil
- 33: Vorrichtung zum Strahlbearbeiten bzw. Strahlen
- 34: Einlassseite der Rücklaufleitung 10
- 35: Strahlgemisch,
- 36: Auslassende der Rücklaufleitung 10
- 37: Deckel
- 38: Boden des Sammelraums, insbesondere der Druckschleuse 2
- 39: Leitung, Druckleitung
- 40: Schaltventil
- 42: Rührschnecke
- 43: Druckerzeugungseinrichtung
- 44: Leitung, Ventil
- 45: Ventil
- 46: Antriebsvorrichtung
- 47: Ventil
- 48: Einlassseite der Druckmittelleitung 21
- 49: trichterförmiger Teil des Strahlgemischdepots 3
- 50: Ventil, Drosselventil für die Leitung 17
- 51: konische Erweiterung der Strahldüse 24
- 52: Mischeinrichtung, Leitelement, statischer Mischer
- 53: Einlassöffnung
- 54: Auslassöffnung
- 58: Querschnitt
- 59: H = Höhe
- 60: B = Breite
- 61: Verschraubung, Überwurfmutter
- 63:
- 64: Ummantelung
- 65: Querschnitt
- 66: Düsenkanal mit gleichbleibendem Querschnitt
- 67: Oberfläche Werkstück
- 68: Düsenkern
- 69: Düsenteil
- 70: Düsenteil
- 71: kontinuierliche bzw. konische Verjüngung des Düsenkanals 66
- 72: Leitung
- 73: Ventil

- S: gesamte Wegstrecke
- S₁: Wegstrecke
- S₂: Wegstrecke
- A: Abstand

## Patentansprüche

1. **Vorrichtung (33) mit einer Strahldüse (24) zum Strahlbearbeiten bzw. Strahlen von Gegenständen, wie Bauelemente, Werkzeuge, Haushaltsgegenstände, Töpfe, Pfannen oder dergleichen, mit einem Strahlgemischdepot (3) zur Aufnahme eines Strahlgemischs (35), das über mindestens eine Leitung (21) mit der Strahldüse (24) verbunden ist, die sich in einen Strahlraum (1) erstreckt, in dem die zu bestrahlenden Gegenstände eingebracht werden können, wobei Druckluft mit Hilfe einer Druckerzeugungseinrichtung (43) oberhalb des im Strahlgemischdepot (3) vorgesehenen Strahlgemischs (35) eingegeben wird und damit das Strahlgemisch (35) in den Strahlraum (1) gepresst wird, wobei die Druckluft über eine zweite Leitung (10) das Strahlgemisch (35) aus dem Strahlraum (1) in das Strahlgemischdepot (3) zurückführt, das als Druckraum ausgebildet ist,**
**dadurch gekennzeichnet,**
**dass der Vorrichtung (33) eine Mischeinrichtung (52) zugeordnet ist, die aus einem oder mehreren Leitelementen besteht, mit deren Hilfe das Strahlgemisch (35) vermischt und/oder verwirbelt wird, wobei die Mischeinrichtung in Strömungsrichtung gesehen in der Leitung an einer Stelle vor der Strahldüse (24) vorgesehen ist und die Strahldüse (24) einen Düsenkanal (66) aufweist, der eine Einlassöffnung (53) und eine Auslassöffnung (54) aufweist und der Querschnitt des Düsenkanals (66) der Strahldüse (24) über eine große Wegstrecke (S₂) zwischen Einlassöffnung (53) und Auslassöffnung (54) in etwa konstant ist und dass die Vorrichtung so aufgebaut ist, dass die Druckluft einzig dazu eingesetzt wird im Strahlgemischdepot (3) Überdruck zu erzeugen, um das Strahlgemisch (35) vom Strahlraum (1) wieder in das Strahlgemischdepot (3) zurückzubefördern.**

2. Vorrichtung nach Anspruch 1,
**dadurch gekennzeichnet,**
**dass** die Leitelemente (52) aus einzelnen schraubenförmigen Elementen bestehen können, die entweder fest miteinander verbunden sind bzw. verschweißt oder zusammengesteckt werden können, wobei die Leitelemente bzw. der statische Mischer (52) so ausgebildet sind, dass sie leicht ausgetauscht werden können.

3. Vorrichtung nach Anspruch 1,
**dadurch gekennzeichnet,**
**dass** die Mischeinrichtung bzw. die Leitelemente (52) an einer Stelle in der Leitung (21) vor dem Düseneinlass vorgesehen sind.

4. Vorrichtung nach Anspruch 1,
**dadurch gekennzeichnet,**
**dass** der Düsenkanal (66) der Strahldüse (24) im Einlassbereich einen Querschnitt (65) aufweist, der größer ist als ein Querschnitt (58), der über die gesamte Wegstrecke (S₂) des Düsenkanals (66) gleich groß ist.

5. Vorrichtung nach Anspruch 1,
**dadurch gekennzeichnet,**
**dass** auf der gesamten Wegstrecke (S₂) des Düsenkanals (66) der Querschnitt (58) des Düsenkanals (66) in etwa rund, oval, mehreckförmig, insbesondere rechteckförmig, ausgebildet ist.

6. Vorrichtung nach Anspruch 1,
**dadurch gekennzeichnet,**
**dass** das Verhältnis Höhe (59) zu Breite (60) des Querschnitts (58) des Düsenkanals (66) zwischen 1 zu 4 bzw. 1 zu 3, insbesondere 1 zu 2.5, beträgt.

7. Vorrichtung nach Anspruch 1,
**dadurch gekennzeichnet,**
**dass** die Höhe (59) des Querschnitts (58) des Düsenkanals (66) zwischen 2 und 6 mm bzw. zwischen 3 und 5 mm, insbesondere in etwa 4 mm, und die Breite (60) des Querschnitts (58) des Düsenkanals (66) zwischen 7 und 13 mm bzw. 9 und 11 mm, insbesondere etwa 10 mm, beträgt.

8. Vorrichtung nach Anspruch 1,
**dadurch gekennzeichnet,**
**dass** ein Abstand (A) zwischen dem Auslassende (54) der Strahldüse (24) und der Auftreffstelle des Strahlgemischs (35) auf eine Oberfläche (67) des Werkstücks zwischen 30 und 70 mm oder 40 bis 60 mm, insbesondere etwa 50 mm, beträgt.

9. Vorrichtung nach Anspruch 1,
**dadurch gekennzeichnet,**
**dass** die Innenoberfläche des Düsenkanals (66) eine polierte bzw. geläppte Fläche aufweist und der Düsenkern aus legiertem Stahl, insbesondere aus Edelstahl, gebildet sein kann.

10. Vorrichtung nach Anspruch 1,
**dadurch gekennzeichnet,**
**dass** die Strahldüse (24) aus zumindest zwei zusammensetzbaren Düsenteilen (69, 70) besteht, die mit Hilfe einer Verschraubung (61) zusammen gehalten werden.

## Claims

1. Device (33) with a blasting nozzle (24) for blastmachining or abrasive blasting objects such as structural elements, tools, household objects, pots, pans or the like, having a blasting abrasive mixture pot (3) for holding a blasting abrasive mixture (35) which is connected via at least one line (21) to the abrasive blasting nozzle (24) which extends into a blasting space (1) in which the objects which are to be blasted can be placed, compressed air being introduced above the blasting abrasive mixture (35) provided in the blasting abrasive mixture pot (3) by means of a pressure-generating means (43) and the blasting abrasive mixture (35) thus being forced into the blasting space (1), the compressed air conveying the blasting abrasive mixture (35) via a second line (10) out of the blasting space (1) and back into the blasting abrasive mixture pot (3), which takes the form of a pressurized space, **characterized in that** the device (33) is assigned a mixing apparatus (52) which consists of one or more guide elements, which are used to mix and/or swirl the blasting abrasive mixture (35), the mixing apparatus being provided in the line at a location upstream of the blasting nozzle (24), when viewed in the flow direction, and the blasting nozzle (24) having a nozzle channel (66) having an inlet opening (53) and an outlet opening (54) and the cross section of the nozzle channel (66) of the blasting nozzle (24) being approximately constant over a large section (S₂) between inlet opening (53) and outlet opening (54) and **in that** the device is constructed such that the compressed air is used only for producing excess pressure in the blasting abrasive mixture pot (3) to return the blasting abrasive mixture (35) from the blasting space (1) to the blasting abrasive mixture pot (3).

2. Device according to Claim 1, **characterized in that** the guide elements (52) can consist of individual screw-type elements which are either fixedly interconnected and welded together, or can be plugged together, with the guide elements or the static mixer (52) being configured such that they can easily be interchanged.

3. Device according to Claim 1, **characterized in that** the mixing apparatus or the guide elements (52) are provided at a location in the line (21) upstream of the nozzle inlet.

4. Device according to Claim 1, **characterized in that** the nozzle channel (66) of the blasting nozzle (24) in the inlet region has a cross section (65) that is greater than a cross section (58) which is the same size over the entire section (S₂) of the nozzle channel (66).

5. Device according to Claim 1, **characterized in that** the cross section (58) of the nozzle channel (66) over the entire section (S₂) of the nozzle channel (66) is approximately round, oval, polygonal, in particular rectangular.

6. Device according to Claim 1, **characterized in that** the ratio of height (59) to width (60) of the cross section (58) of the nozzle channel (66) is between 1 and 4 or 1 and 3, in particular 1 and 2.5.

7. Device according to Claim 1, **characterized in that** the height (59) of the cross section (58) of the nozzle channel (66) is between 2 and 6 mm or between 3 and 5 mm, in particular approximately 4 mm, and the width (60) of the cross section (58) of the nozzle channel (66) is between 7 and 13 mm or 9 and 11 mm, in particular approximately 10 mm.

8. Device according to Claim 1, **characterized in that** a distance (A) between the outlet end (54) of the blasting nozzle (24) and the location of impingement of the blasting abrasive mixture (35) on a surface (67) of the workpiece is between 30 and 70 mm or 40 and 60 mm, in particular approximately 50 mm.

9. Device according to Claim 1, **characterized in that** the inside surface of the nozzle channel (66) has a polished or lapped surface and the nozzle core can be made of alloyed steel, in particular stainless steel.

10. Device according to Claim 1, **characterized in that** the blasting nozzle (24) consists of at least two nozzle parts (69, 70) which can be assembled and are held together using a screw connection (61).

## Revendications

1. Dispositif (33) comprenant une buse à jet (24) pour le sablage ou le grenaillage d'objets, comme des composants, des outils, des articles ménagers, des casseroles, des poêles ou similaires, comprenant un stock de mélange à pulvériser (3) pour recevoir un mélange à pulvériser (35), qui est connecté par le biais d'au moins une conduite (21) à la buse à jet (24), laquelle s'étend dans un espace de pulvérisation (1) dans lequel les objets à traiter peuvent être introduits, de l'air comprimé étant introduit à l'aide d'un dispositif de génération de pression (43) au-dessus du mélange à pulvériser (35) prévu dans le stock de mélange à pulvériser (3), et de ce fait le mélange à pulvériser (35) étant comprimé dans l'espace de pulvérisation (1), l'air comprimé renvoyant le mélange à pulvériser (35) dans le stock de mélange à pulvériser (3) depuis l'espace de pulvérisation (1) par le biais d'une deuxième conduite (10), le stock de mélange à pulvériser étant réalisé sous forme d'espace de pression,
**caractérisé en ce que**
le dispositif (33) est associé à un dispositif de mélange (52) qui se compose d'un ou de plusieurs éléments conducteurs, à l'aide desquels le mélange à pulvériser (35) est mélangé et/ou mis en tourbillonnement, le dispositif de mélange, vu dans la direction d'écoulement, étant prévu dans la conduite à un endroit situé avant la buse à jet (24) et la buse à jet (24) présentant un canal de buse (66) qui présente une ouverture d'entrée (53) et une ouverture de sortie (54) et la section transversale du canal de buse (66) de la buse à jet (24) étant approximativement constante sur une grande longueur (S₂) entre l'ouverture d'entrée (53) et l'ouverture de sortie (54), et **en ce que** le dispositif est réalisé de telle sorte que l'air comprimé soit prévu uniquement pour produire une surpression dans le stock de mélange à pulvériser (3) afin de refouler le mélange à pulvériser (35) depuis l'espace de pulvérisation (1) jusque dans le stock de mélange à pulvériser (3).

2. Dispositif selon la revendication 1,
**caractérisé en ce que**
les éléments conducteurs (52) peuvent être composés d'éléments individuels de forme hélicoïdale qui sont connectés fixement les uns aux autres ou qui peuvent être soudés ou assemblés par enfichage les uns aux autres, les éléments conducteurs ou le mélangeur statique (52) étant réalisés de telle sorte qu'ils puissent être facilement remplacés.

3. Dispositif selon la revendication 1,
**caractérisé en ce que**
le dispositif de mélange ou les éléments conducteurs (52) sont prévus à un endroit dans la conduite (21) situé avant l'entrée de la buse.

4. Dispositif selon la revendication 1,
**caractérisé en ce que**
le canal de buse (66) de la buse à jet (24) présente, dans la région d'entrée, une section transversale (65) qui est supérieure à une section transversale (58) qui est identique sur toute la longueur (S₂) du canal de buse (66).

5. Dispositif selon la revendication 1,
**caractérisé en ce que**
la section transversale (58) du canal de buse (66), sur toute la longueur (S₂) du canal de buse (66), est réalisée sous forme approximativement circulaire, ovale, polygonale, notamment rectangulaire.

6. Dispositif selon la revendication 1,
**caractérisé en ce que**
le rapport hauteur (59) à largeur (60) de la section transversale (58) du canal de buse (66) est compris entre 1 et 4, respectivement 1 et 3, en particulier entre 1 et 2,5.

7. Dispositif selon la revendication 1,
**caractérisé en ce que**
la hauteur (59) de la section transversale (58) du canal de buse (66) est comprise entre 2 et 6 mm, respectivement entre 3 et 5 mm, notamment vaut approximativement 4 mm, et la largeur (60) de la section transversale (58) du canal de buse (66) est comprise entre 7 et 13 mm, respectivement entre 9 et 11 mm, notamment vaut approximativement 10 mm.

8. Dispositif selon la revendication 1,
**caractérisé en ce**
**qu'**une distance (A) entre l'extrémité de sortie (54) de la buse à jet (24) et le point d'incidence du mélange à pulvériser (35) sur une surface (67) de la pièce est comprise entre 30 et 70 mm ou entre 40 et 60 mm, notamment vaut environ 50 mm.

9. Dispositif selon la revendication 1,
**caractérisé en ce que**
la surface interne du canal de buse (66) présente une face polie ou rodée et le noyau de buse peut être formé d'acier allié, en particulier d'acier spécial.

10. Dispositif selon la revendication 1,
**caractérisé en ce que**
la buse à jet (24) se compose d'au moins deux parties de buse pouvant être assemblées l'une à l'autre (69, 70) qui sont maintenues ensemble à l'aide d'un vissage (61).
